# EUROPÄISCHE PATENTSCHRIFT

(11) **EP 1 143 221 B1**
(45) Veröffentlichungstag und Bekanntmachung des Hinweises auf die Patenterteilung: **28.06.2006**
(21) Anmeldenummer: 01104224.9
(22) Anmeldetag: 22.02.2001
(51) Int. Cl.: G01B 11/00

(54) **Verfahren zur Bestimmung der Position eines Koordinatensystems eines Werkstücks im 3D-Raum**
Method for determining the position of a coordinate system of an object in a 3D space
Méthode pour déterminer la position d'un système de coordonnées d'un objet dans un espace à 3 dimensions

(30) Priorität: 06.04.2000 DE 10016963
(43) Veröffentlichungstag der Anmeldung: 10.10.2001
(73) Patentinhaber: VMT Vision Machine Technic GmbH, 69469 Weinheim (DE); TECMEDIC GmbH, 45877 Gelsenkirchen (DE)
(72) Erfinder: Mikeska, Harald Manfred Günter, 68219 Mannheim (DE); Grünewald, Dirk, Dipl.-Ing., 64584 Biebesheim (DE); Grünewald, Frank, Dr.,-Ing., 69488 Birkenau (DE); Neddemeyer, Werner, Prof.,-Dr., 64367 Mühlthal (DE); Schnell, Michael, Prof., 64625 Bensheim (DE); Lilienthal, Angela, 45143 Essen (DE)
(74) Vertreter: Mierswa, Klaus

(56) Entgegenhaltungen:
- US-A- 4 639 878
- US-A- 4 928 175
- US-A- 5 285 397
- TSAI R Y: "A VERSATILE CAMERA CALIBRATION TECHNIQUE FOR HIGH-ACCURACY 3D MACHINE VISION METROLOGY USING OFF-THE-SHELF TV CAMERAS AND LENSES" IEEE JOURNAL OF ROBOTICS AND AUTOMATION, IEEE INC. NEW YORK, US, Bd. RA-3, Nr. 4, August 1987 (1987-08), Seiten 323-344, XP000891213
- LENZ R K ET AL: "TECHNIQUES FOR CALIBRATION OF THE SCALE FACTOR AND IMAGE CENTER FORHIGH ACCURACY 3-D MACHINE VISION METROLOGY" IEEE TRANSACTIONS ON PATTERN ANALYSIS AND MACHINE INTELLIGENCE, IEEE INC. NEW YORK, US, Bd. 10, Nr. 5, 1. September 1988 (1988-09-01), Seiten 713-720, XP000118129 ISSN: 0162-8828
- HANQI HUANG ET AL: "On vision-based robot calibration" SOUTHCON /94. CONFERENCE RECORD. ORLANDO, MAR. 29 - 31, 1994, NEW YORK, IEEE, US, 29. März 1994 (1994-03-29), Seiten 104-109, XP010158046 ISBN: 0-7803-9989-7
- BACHNAK R A ET AL: "A stereo system for 3-D measurements in robot workspaces" INTELLIGENT CONTROL, 1989. PROCEEDINGS., IEEE INTERNATIONAL SYMPOSIUM ON ALBANY, NY, USA 25-26 SEPT. 1989, WASHINGTON, DC, USA,IEEE COMPUT. SOC. PR, US, 25. September 1989 (1989-09-25), Seiten 293-298, XP010017602 ISBN: 0-8186-1987-2

## Beschreibung

### Technisches Gebiet.

Die Erfindung betrifft ein Verfahren zur Bestimmung der Position eines Werkstücks und der Position von Merkmalen des Werkstücks im 3D-Raum unter Verwendung von mindestens zwei elektronischen Kameras und digitaler Bildverarbeitung, bei welchem die Kameras auf ein gemeinsames Weltkoordinatensystem kalibriert werden und anschließend das Werkstück in den Raum zwischen den Kameras verbracht wird, gemäß dem Oberbegriff des Anspruchs 1.

### Stand der Technik:

Die schnelle und berührungslose 3D-Vermessung eines dreidimensionalen Körpers besitzt eine Schlüsselfunktion auf dem Weg zu höhere Automatisierung und zur vollständigen Qualitätsüberwachung in vielen Fertigungsprozessen. Nach der erfolgreichen Einführung der 2D-Bilderfassung und -verarbeitung in praktisch allen industriellen und gesellschaftlichen Bereichen, steht die 3D-Bilderfassung und - verarbeitung am Beginn einer offensichtlich vergleichbar bedeutenden Entwicklung. Besonders in der industriellen Produktion kommt der schnellen und berührungslosen 3D-Positions- und 3D-Formerfassung eine große Bedeutung zu, so z. B. für die Maßhaltigkeitskontrolle, die Vollständigkeitsprüfung, Robotervision in der automatischen Montage, Prüfung von Oberflächenstrukturen, Reserve-Engineering, Überwachung von Sicherheitszonen, 3D-Objekterkennung und Navigation im Raum. Die 3D-Formerfassung liefert die absoluten Geometriemaße von Objekten, die unabhängig vom Oberflächenzustand, von der Entfernung, Drehung und Beleuchtung sind, d. h. sie sind rotations-, verschiebungs- und beleuchtungsinvariant. Allerdings ist der Aufwand unvergleichlich höher als bei der 2D-Projektion, bei der die Tiefeninformation der 3D-Szenen verloren geht. Die 3D-Positionserfassung liefert die genaue Kenntnis der Position von Objekten im Raum und deren Lage relativ zueinander. Damit ist sie für eine Vielzahl von technischen Verfahren von elementarer Bedeutung.

Die Kalibrierung von elektronischen Kameras ist ein vielfach untersuchtes Thema. Führend auf diesem Gebiet sind Verfahren, die sich mit der Auswertung von bekannten Mustern im Videobild befassen, wobei alle bekannten Verfahren auf dem Modell der Lochkamera aufsetzen. Die Parameter sind die optimale Brennweite, die Position der Lichteintrittsöffnung im Raum und Linsenverzeichnungsparameter sowie Parameter, die sich mit der Position des CCD-Chips im Bezug zum Lochkoordinatensystem befassen. Alle bekannten Verfahren zur Bestimmung dieser Parameter basieren auf der Auswertung von Videobildern. In diesen Videobildern versucht man, über die Betrachtung von Kalibrierkörpern oder Kalibrierplatten die Parameter der Kameramodelle zu ermitteln.

Speziell die berührungslose Messung von 3D-Koordinaten mittels CCD-Kameras birgt systembedingt das größte Potential an Möglichkeiten, stellt aber gleichzeitig die höchsten Anforderungen an Methodik und Technik. Zur Analyse komplexer 3D-Szenen müssen Methoden und Verfahren der Mustererkennung, der klassische Bildverarbeitung und der Photogrammetrie eingesetzt werden, mit dem Ziel, die Positionen bestimmter Objekte und deren Lage zueinander zu erfassen. Mit der Komplexität der Szene steigt die Menge der zu verarbeitenden Informationen und damit die Notwendigkeit, effiziente Methoden und Verfahren einzusetzen. Andernfalls steigt der Leistungsanspruch an die zum Einsatz kommende Rechnerhardware überproportional.

Der Einsatz von Handhabungsgeräten und Robotern ist in der Regel daran gebunden, dass die Position des zu handhabenden Objektes in engen Grenzen definiert ist. In vielen Produktionsprozessen kann dies entweder nicht sichergestellt werden oder muss durch eine aufwendige, teure und gleichzeitig inflexible Positioniereinheit erreicht werden. Letzteres steht dem Wunsch nach flexiblen Produktionsstraßen entgegen.

So werden z. B. Automobilkarossen in bestimmten Abschnitten der Produktion hängend an einem Transportsystem bewegt, das eine Karosse lediglich mit einer Genauigkeit von +/- 30 mm positionieren kann. Eine Bearbeitung durch einen Roboter wird damit unmöglich, wenn für den Arbeitsvorgang selbst eine höhere Genauigkeit gefordert wird.

In der Massenfertigung von Stanz- oder Biegeteilen werden diese häufig ungeordnet in Kisten den weiteren Arbeitsstationen zugeführt. Eine Vereinzelung der Teile ist im Allgemeinen einfach möglich. Die genaue Positionierung relativ zu einem Robotersystem muss jedoch oft mit aufwendigen mechanischen Anordnungen, die genau auf das Produkt abgestimmt sind, erfolgen.

Durch die EP 0 763 406 A1 ist ein Verfahren zum Bestimmen der Lage eines Körpers im Raum bekannt geworden, um Manipulationen an diesem durchzuführen, mit mehreren mit diesem zusammenwirkenden räumlich getrennten elektronischen Kameras mit Bildverarbeitung. Jede von mindestens drei räumlich getrennten elektronischen Kameras mit Bildverarbeitung nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage speichert. Eine Vermessung der Kalibriertafeln zueinander erfolgt hiervon getrennt, wobei diese Werte ebenfalls gespeichert werden. Anschließend wird der zu vermessende Körper in den Raum zwischen den elektronischen Kameras verbracht. Je ein charakteristischer Punkt auf dem in den Raum verbrachten Körper wird in je einer diesem zugeordneten elektronischen Kamera abgebildet, so dass dessen Lage in Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in dem Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen wie sie auch Lagerplatz benötigen. Der wesentliche Nachteil ist, dass die Kalibriertafeln mit einem großen Aufwand mechanisch im Sichtfeld der Kameras positioniert werden müssen und die Positionierbarkeit äußerst wiederholgenau sein muss. Diese Reproduzierbarkeit der Positionierung zu gewährleisten ist oft mit erheblichen Kosten verbunden, da die räumlichen Verhältnisse zum Beispiel in der Fördertechnik häufig schwierig sind.

Durch die EP 0473010A2 ist ein Verfahren zur berührungslosen Koordinatenvermessung von Objektoberflächen bekannt geworden, bei dem mit einer Kamera Bilder des Objektes von mehreren unterschiedlichen Positionen aus aufgenommen werden. Die Kamera ist dazu in den Messarm eines Koordinatenmessgerätes gesetzt, wobei der Messarm in mindestens zwei verschiedene Stellungen verfahren wird und das zu vermessende Objekt mit Hilfe einer Dreh-Schwenk-Einrichtung angezielt wird. Die in zwei Stellungen aufgenommenen Bilder werden abgespeichert und in Bezug auf die Koordinaten charakteristischer Punkte ausgewertet. Dabei werden die von den Maßstäben des Koordinatenmessgerätes und den Winkelgebern der Dreh-Schwenk-Einrichtung erhaltenen Positionswerte für die Berechnung der Objektkoordinaten aus den Bildkoordinaten der Kamera herangezogen.

Als weiterer Stand der Technik ist noch R. Gerdes, R. Otterbach, R. Kammüller: Kalibrierung eines digitalen Bildverarbeitungssystems mit CCD-Kamera- Teil I und Teil II, in: tm Technisches Messen 60, 1993, 6, S. 255-261 (Teil I) und 60, 1993, 7/8, S. 283-288 (Teil II) zu nennen.

Durch die US-A-5285397 ist Koordinatenmessgerät zur berührungslosen Vermessung von Objekten mittels mehrerer Kameras bekannt geworden, die auf motorisch dreh- und schwenkbaren sowie höhenverstellbaren Winkelpositionsgebern befestigt und im gegenseitigen Abstand neben dem Objekt aufgestellt sind und deren Videosignale zusammen mit den Winkeldaten der Geber einem Rechner zur Bestimmung der Koordinatenwerte zugeführt werden. Die Geber sind mit den Kameras an einen mit einer Schwingungsdämpfung versehenen Tisch für das zu vermessende Objekt angebaut, auf welchem mehrere Kalibrierkörper im Bildfeld der Kameras aufgestellt sind. Daneben sind ein oder mehrere Ziel-Markenprojektoren vorgesehen, die anstelle einer Kamera auswechselbar an einer Aufnahmeplatte befestigbar sind. In den Werkstücktisch ist ein Drehtisch integriert, wobei die Winkeldaten des dem Drehtisch zugeordneten Messsystems ebenfalls dem Rechner zugeführt werden. Das hier angewandte Messverfahren beruht auf dem Stereovisions-Prinzip und arbeitet mit bewegten Kameras.

Durch die Veröffentlichung von TSAI, Roger Y.: "A Versatile Camera Calibration Technique for High-Accuracy 3D Machine Vision Metrology Using Off-the-shelf TV Cameras and Lenses", in IEEE Inc. New York, US, Bd. RA-3, Nr. 4, August 1987 (1987-08) Seiten 323,344, XP000891213, ist ein ähnliches Koordinatenmessgerät wie das vorgenannte zur berührungslosen Vermessung von Objekten mittels mehrerer Kameras bekannt geworden. Ebenso ist durch die Veröffentlichung von TSAI, Roger Y. und LENZ Reimar K.: " Technique for Calibration of the Scale Factor and Image Center for High-Accuracy 3D Machine Vision Metrology" ein ähnliches Koordinatenmessgerät wie das vorgenannte zur berührungslosen Vermessung von Objekten bekannt geworden.

### Technische Aufgabe:

Der Erfindung liegt die Aufgabe zugrunde, ein Verfahren der eingangs genannten Gattung zu schaffen, welches zum Bestimmen der Lage eines Körpers im Raum ohne Kalibriertafeln auskommt und die Bestimmung der Lage eines Körpers im Raum verbessert.

### Offenbarung der Erfindung und deren Vorteile:

Die Lösung der Aufgabe besteht bei einem Verfahren der eingangs genannten Gattung darin, dass
- zur Erstellung des gemeinsames Weltkoordinatensystems die Kameras einzeln als Lochkameramodelle behandelt werden,
- eine direkte Vermessung der Position der Lichteintrittsöffnung und der Orientierung einer jeden Kamera erfolgt, indem die Position der Lichteintrittsöffnung und die Orientierung einer jeden Kamera in ihrem passiven Zustand mit einem separaten Messsystem vermessen wird, nämlich mittels 3D-Lasermeßsystem oder Theodolit die Lichteintrittsöffnung angetastet wird, was die Position der Lichteintrittsöffnung und die Orientierung einer jeden Kamera im Weltkoordinatensystem liefert,
- wobei zur Vermessung der Lichteintrittsöffnung einer jeden Kamera (c) im passiven Zustand die Lichteintrittsöffnung der Kamera (c) mit einem Messkörper (b) versehen wird, der eine feste, gegebene Beziehung (7) zur Lichteintrittsöffnung einer jeden Kamera (c) und zum lichtempfindlichen Element, beispielsweise CCD-Chip, der Kamera (c) aufweist und die Position und die Orientierung (6) des Messkörpers (b) mittels des separaten Messsystems (a) ermittelt wird,
- das in den Raum zwischen den Kameras verbrachte Werkstück durch die nunmehr aktiven Kameras optisch abgebildet und die Videobilder mit einem Rechner zum Auffinden von Merkmalen des Werkstücks ausgewertet werden,
- aus der Kenntnis der Position der Kameras bezüglich des Weltkoordinatensystems, der Videobilder und der Koordinaten der Merkmale des Werkstücks in einem Koordinatensystem des Werkstücks durch einen Rechner nach der Methode des Bündelausgleichs die Position des Werkstücks in Weltkoordinaten sowie die Position der Merkmale des Werkstücks in Weltkoordinaten errechnet werden.

Weitere vorteilhafte Ausgestaltungen der Erfindung sind in den Unteransprüchen enthalten.

Zur Vermessung kann die Lichteintrittsöffnung einer jeden Kamera zum Beispiel mit einem optisch anvisierbaren Kreuz versehen werden, durch dessen Kreuzungspunkt die optische Achse verläuft, die ebenfalls durch das lichtempfindliche Element, beispielsweise CCD-Chip bzw. dessen aktive Fläche, der Kamera verläuft.

Das erfindungsgemäße Verfahren besitzt den Vorteil, dass es zum Bestimmen der Lage eines Körpers im Raum keine Kalibriertafeln benötigt und die Kameras insoweit nur als passive Objekte oder passive Träger der Messkörper dienen. Es wird zur Vermessung der Lichteintrittsöffnung einer jeden Kamera im passiven Zustand die Lichteintrittsöffnung mit einem Messkörper versehen, der eine feste gegebene Beziehung zur Lichteintrittsöffnung einer jeden Kamera und zum lichtempfindlichen Element, beispielsweise CCD-Chip, der Kamera aufweist und sodann die Position und die Orientierung des Messkörpers mittels des separaten Messsystems ermittelt wird. Die passiven Kameras dienen während des Vermessungsvorgangs nur als Träger der Messkörper.

Das Einmessen der Anlage bzw. der Kameras kann schon dann erfolgen, wenn die Kameras nur montiert sind, ohne dass das eigentliche Bildverarbeitungssystem, wie PC, Verschaltung, Anschlüsse, in Betrieb genommen bzw. funktionsfähig ist.

Die Positionsbestimmung der Merkmale im Videobild erfolgt mit Algorithmen der Bildverarbeitung, zum Beispiel mittels skalierter Grauwertkorrelation oder Schwerpunktberechnung von Löchern oder Kantenantastung oder deren Kombination.

Vorteilhaft werden CCD-Kameras mit Objektiv-Schraubgewinde verwendet, wobei die Messkörper ein entsprechendes, auf die Schraubgewinde der Kameras passendes Gewinde aufweisen und auf die CCD-Kameras aufgeschraubt werden. Statt der Schraubgewinde können auch Bajonett- oder Steckverschlüsse an den Kameras und den Messkörpern verwendet werden.

### Bevorzugte Ausführungsform der Erfindung:

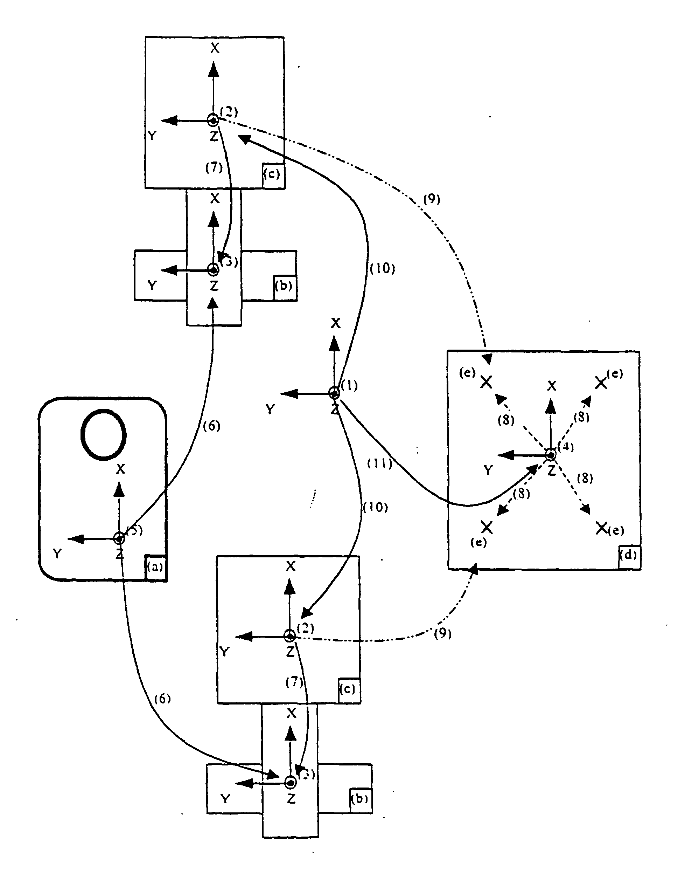

In der Zeichnung ist ein Beispiel zur Durchführung des erfindungsgemäßen Verfahrensablaufes gezeigt.

Zur Bestimmung der Position von Kameras c im gemeinsames Weltkoordinatensystems werden die Kameras c, von denen wenigstens zwei Stück zum Einsatz gelangen, einzeln als Lochkameramodelle behandelt, wobei die direkte Vermessung der Position der Lichteintrittsöffnung einer jeden Kamera c erfolgt. Hierzu wird die Position der Lichteintrittsöffnung einer jeden Kamera c in ihrem passiven Zustand mit einem separaten Messsystem a vermessen, welches zur direkten Antastung der Lichteintrittsöffnung imstande ist, wobei das Messsystem a ein 3D-Lasermesssystem oder ein Theodolit ist. Das separate Messsystem a ermittelt die Position der Lichteintrittsöffnung und die Orientierung der passiven Kameras c. Anschließend wird ein Werkstück d in den Raum zwischen den Kameras c verbracht und durch die nunmehr aktiven Kameras c optisch abgebildet. Anschließend werden die Videobilder der Kameras c mit einem Rechner zum Auffinden von Merkmalen e des Werkstücks d ausgewertet. Aus der Kenntnis der Position der Kameras bzw. des Kamerakoordinatensystems 2 bezüglich des Messsystems a bzw. des Koordinatensystems 5 des Messsystems a, der Videobilder 9 und der Koordinaten 4 des Werkstücks d bzw. der Koordinaten 8 von Merkmalen e des Werkstücks d errechnet der Rechner nach der Methode des Bündelausgleichs die Position 11 des Werkstücks d in Weltkoordinaten 1 und damit auch die Position der Merkmale e des Werkstücks d in Weltkoordinaten 1.

Der Ablauf einer Messung erfolgt durch die Betrachtung von Merkmalen e des Werkstücks d mit mindestens zwei Kameras c, wobei in jedem Kamerabild andere Merkmale e abgebildet werden. Die Kamerabilder werden digitalisiert und in einem Rechner verarbeitet. Der Rechner kennt die Position 2 der Kameras im Raum 10, also im Weltkoordinatensystem 1 ebenso wie er die Koordinaten 8 der Merkmale e im Koordinatensystem 4 des Werkstücks d kennt. Der Rechner bestimmt aus diesen Informationen die Lage 11 des Werkstücks d in dem festen Weltkoordinatensystem 1.

Die berührungslose Positionsbestimmung von Werkstücken kann somit im Wesentlichen in drei Schritte aufgeteilt werden.
1. Die Kalibrierung der verwendeten Kameras oder Kamerasysteme auf ein gemeinsames Weltkoordinatensystem 1.
2. Die Auswertung von Videobildern der Kameras mit einem Rechner zur Auffindung von Merkmalen e eines Werkstücks d.
3. Die Berechnung von Werkstückposition 11 aus der Kenntnis der Kameraposition 10, der Videobilder 9 und der Koordinaten 8 des Werkstücks.

Das erfindungsgemäße Verfahren betrifft die direkte Messung der Position der Lichteintrittsöffnung der Kamera und aller weiteren geometrischen Parameter eines Lochkameramodells durch direkte Antastung der Lichteintrittsöffnung mit einem separaten Messsystem a, 3D-Lasermesssystem oder Theodolit, ohne dass die Kameras c dabei aktiv sind. Dazu werden die Kameras c mit einem Messkörper b versehen. Dieser Messkörper hat eine feste Beziehung 7 zur Lichteintrittsöffnung des Kameramodells und zum CCD-Chip. Die Position und die Orientierung 6 des Messkörpers wird über ein separates 3D-Messsystem a ermittelt. Es ist keine weitere Kalibrierung an Hand von Videobildern unter Verwendung von Kalibrierplatten oder Ähnliches notwendig.

Die Erfassung der Merkmale e des, vorzugsweise dreidimensionalen, Werkstücks d erfolgt mittels elektronischen Kameras c. Die Positionsbestimmung 9 der Merkmale im Videobild erfolgt zum Beispiel mittels skalierter Grauwertkorrelation oder Schwerpunktsberechnung von Löchern oder Kantenantastung oder deren Kombinationen.

Aus den so gewonnenen Daten wird zusammen mit den Koordinaten 8 des Werkstücks d die Position 11 des Körpers d in Weltkoordinaten 1 mit der Methode des Bündelausgleichs berechnet.

Die Kameras c können mit der beschriebenen Methode an einem festen Ort eingemessen werden. Genauso kann eine oder mehrere der Kameras c an einer numerisch gesteuerten Maschine oder einem Roboter angebracht werden.

### Gewerbliche Anwendbarkeit:

Das erfindungsgemäß Verfahren ist insbesondere zur Bestimmung der Position eines Werkstücks und der Position von Merkmalen des Werkstücks im 3D-Raum geeignet, beispielsweise zur Vermessung von Automobilkarossen.

### Bezugszeichenliste:

- a: separates Messsystem
- b: Messkörper
- c: Kamera
- d: Körper
- e: Körpermerkmale

1 Weltkoordinatensystem
2 Kamerakoordinatensystem
3 Messkörperkoordinatensystem
4 Körperkoordinatensystem
5 Koordinatensystem separates Messsystem
6 Lage des (3) in (5)
7 Lage (3) in (2)
8 Lage (e) in (4)
9 Lage (e) in Bildkoordinaten von (c)
10 Lage (2) in (1)
11 Lage (4) in (1)
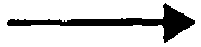 3D-Vektor (x, y, z, A, B, C)
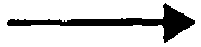 3D-Koordinate (x, y, z)
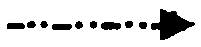 2D-Koordinate (x, y)

## Patentansprüche

1. Verfahren zur Bestimmung der Position eines Werkstücks (d) und der Position von Merkmalen des Werkstücks im 3D-Raum unter Verwendung von mindestens zwei elektronischen Kameras (c) und digitaler Bildverarbeitung, bei welchem die Kameras (c) auf ein gemeinsames Weltkoordinatensystem (1) kalibriert werden und anschließend das Werkstück (d) in den Raum zwischen den Kameras (c) verbracht wird,
**dadurch gekennzeichnet dass**
- zur Erstellung des gemeinsames Weltkoordinatensystems die Kameras (c) einzeln als Lochkameramodelle behandelt werden,
- eine direkte Vermessung der Position der Lichteintrittsöffnung und der Orientierung einer jeden Kamera erfolgt, indem die Position der Lichteintrittsöffnung und die Orientierung einer jeden Kamera in ihrem passiven Zustand mit einem separaten Messsystem vermessen wird, nämlich mittels 3D-Lasermeßsystem oder Theodolit die Lichteintrittsöffnung angetastet wird, was die Position der Lichteintrittsöffnung und die Orientierung einer jeden Kamera im Weltkoordinatensystem liefert,
- wobei zur Vermessung der Lichteintrittsöffnung einer jeden Kamera (c) im passiven Zustand die Lichteintrittsöffnung der Kamera (c) mit einem Messkörper (b) versehen wird, der eine feste, gegebene Beziehung (7) zur Lichteintrittsöffnung einer jeden Kamera (c) und zum lichtempfindlichen Element, beispielsweise CCD-Chip, der Kamera (c) aufweist und die Position und die Orientierung (6) des Messkörpers (b) mittels des separaten Messsystems (a) ermittelt wird,
- das in den Raum zwischen den Kameras verbrachte Werkstück durch die nunmehr aktiven Kameras (c) optisch abgebildet und die Videobilder mit einem Rechner zum Auffinden von Merkmalen (e) des Werkstücks (d) ausgewertet werden,
- aus der Kenntnis der Position der Kameras (10) bezüglich des Weltkoordinatensystems (1), der Videobilder (9) und der Koordinaten (8) der Merkmale des Werkstücks (d) in einem Koordinatensystem des Werkstücks durch einen Rechner nach der Methode des Bündelausgleichs die Position (11) des Werkstücks (d) in Weltkoordinaten sowie die Position der Merkmale (e) des Werkstücks (d) in Weltkoordinaten (1) errechnet werden.

2. Verfahren nach Anspruch 1, **dadurch gekennzeichnet,**
**dass** die Positionsbestimmung (9) der Merkmale im Videobild mit Algorithmen der Bildverarbeitung, zum Beispiel mittels skalierter Grauwertkorrelation oder Schwerpunktberechnung von Löchern oder Kantenantastung oder deren Kombination, erfolgt.

3. Verfahren nach Anspruch 1 oder 2, **dadurch gekennzeichnet,**
**dass** CCD-Kameras (c) mit Objektiv-Schraubgewinde verwendet werden und die Messkörper (b) ein entsprechendes Schraubgewinde aufweisen und auf die CCD-Kameras aufgeschraubt werden.

## Claims

1. A method for determining the position of a workpiece (d) and the position of features of the workpiece in three-dimensional space, employing at least two electronic cameras (c) and digital image processing, in which method the cameras (c) are calibrated to a shared world coordinate system (1) and subsequently the workpiece (d) is placed into the space between the cameras (c),
**characterized in that**
• in order to create the shared world coordinate system, the cameras (c) are treated individually as pinhole camera models,
• a direct survey of the position of the light admission opening and of the orientation of each camera is carried out **in that** the position of the light admission opening and the orientation of each camera are surveyed in their passive state with a separate measuring system, namely, a three-dimensional laser measuring system or theodolite scans the light admission opening, thus yielding the position of the light admission opening and the orientation of each camera in the world coordinate system,
• whereby, in order to survey the light admission opening of each camera (c) in the passive state, the light admission opening of the camera (c) is provided with a measuring element (b) that has a fixed, given relationship (7) to the light admission opening of each camera (c) and to the light-sensitive element, for example, a CCD chip, of the camera (c), and the position and the orientation (6) of the measuring element (b) are determined by means of the separate measuring system (a),
• the workpiece placed into the space between the cameras is optically imaged by means of the now-active cameras (c) and the video images are evaluated with a computer in order to ascertain features (e) of the workpiece (d),
• on the basis of the knowledge about the position of the cameras (10) relative to the world coordinate system (1), about the video images (9) and about the coordinates (8) of the features of the workpiece (d) in a coordinate system of the workpiece acquired by a computer according to the method of bundle adjustment, the position (11) of the workpiece (d) in world coordinates as well as the position of the features (e) of the workpiece (d) in world coordinates (1) are calculated.

2. The method according to claim 1, **characterized in that**
the determination (9) of the position of the features in the video image is carried out with algorithms of image processing, for example, by means of gray-scale value correlation or focal point calculation of holes or edge scanning or a combination thereof.

3. The method according to claim 1 or 2, **characterized in that**
CCD cameras (c) having objective screw threads are used and the measuring elements (b) have a matching screw thread and are screwed onto the CCD cameras.

## Revendications

1. Méthode pour déterminer la position d'un objet (d) et la position de caractéristiques distinctives de l'objet dans un espace à trois dimensions, en ayant recours à au moins deux caméras électroniques (c) et au traitement numérique des images, méthode avec laquelle les caméras (c) sont calibrées selon un système de coordonnées mondiales commun (1) et l'objet est ensuite conduit dans l'espace entre les caméras (c),
**caractérisé en ce que**
- pour établir le système de coordonnées mondiales commun, les caméras (c) sont traitées individuellement comme modèles de chambres noires à sténopé,
- une mesure directe de la position de l'ouverture d'entrée de la lumière et de l'orientation de chacune des caméras s'effectue en mesurant la position de l'ouverture d'entrée de la lumière et l'orientation de chacune des caméras dans son état passif avec un système de mesure séparé, à savoir l'ouverture d'entrée de la lumière est palpée au moyen d'un système de mesure laser 3D ou d'un théodolite, ce qui fournit la position de l'ouverture d'entrée de la lumière et l'orientation de chacune des caméras dans le système de coordonnées mondiales,
- pour la mesure de l'ouverture d'entrée de la lumière de chacune des caméras (c) à l'état passif, l'ouverture d'entrée de la lumière de la caméra (c) étant dotée d'un corps de mesure (b) qui présente un rapport donné fixe (7) par rapport à l'ouverture d'entrée de la lumière de chacune des caméras (c) et à l'élément photosensible de la caméra (c), par exemple une puce CCD et la position et l'orientation (6) du corps de mesure (b) étant déterminées au moyen du système de mesure séparé (a),
- l'objet conduit dans l'espace entre les caméras (c) désormais actives est représenté optiquement et les images vidéo sont analysées par un ordinateur, afin de détecter les caractéristiques distinctives (e) de l'objet (d),
- partant de la connaissance de la position des caméras (10) eu égard au système de coordonnées mondiales (1), des images vidéo (9) et des coordonnées (8) des caractéristiques distinctives de l'objet (d) dans un système de coordonnées de l'objet, un ordinateur calcule, d'après la méthode de l'ajustement de faisceaux, la position (11) de l'objet (d) en coordonnées mondiales, ainsi que la position des caractéristiques distinctives (e) de l'objet (d) en coordonnées mondiales (1).

2. Méthode selon la revendication 1, **caractérisée en ce que**
la détermination de la position (9) des caractéristiques distinctives dans l'image vidéo s'effectue avec des algorithmes du traitement de l'image, par exemple au moyen d'une corrélation de valeurs de gris échelonnée ou du calcul du centre de gravité de trous ou du palpage des bords ou de leur combinaison.

3. Méthode selon l'une des revendications 1 ou 2, **caractérisée en ce que**
des caméras CCD (c) avec monture à vis de l'objectif sont utilisées et les corps de mesure présentent un filet correspondant et sont vissés sur les caméras CCD.
